Europäisches Patentamt

European Patent Office

Office européen des brevets

(19)

(11) Veröffentlichungsnummer: **0 163 185 B1**

(12) **EUROPÄISCHE PATENTSCHRIFT**

(45) Veröffentlichungstag der Patentschrift: **24.07.91**

(51) Int. Cl.⁵: **B23Q 11/00, B23D 49/16**

(21) Anmeldenummer: **85105810.7**

(22) Anmeldetag: **11.05.85**

(54) **Stichsäge.**

(30) Priorität: **01.06.84 DE 3420442**

(43) Veröffentlichungstag der Anmeldung:
**04.12.85 Patentblatt 85/49**

(45) Bekanntmachung des Hinweises auf die
Patenterteilung:
**24.07.91 Patentblatt 91/30**

(84) Benannte Vertragsstaaten:
**AT CH FR GB IT LI SE**

(56) Entgegenhaltungen:
**FR-A- 2 327 845**
**US-A- 2 369 925**
**US-A- 2 902 067**
**US-A- 3 938 251**
**US-A- 4 240 204**

(73) Patentinhaber: **Festo KG**
**Ulmer Strasse 48**
**W-7300 Esslingen a.N.(DE)**

(72) Erfinder: **Maier, Peter, Dipl.-Ing. (FH)**
**Gerokstrasse 1**
**W-7311 Neidlingen(DE)**
Erfinder: **Hänsel, Gernot, Dipl.-Ing. (FH)**
**Gerstenstrasse 31**
**W-7000 Stuttgart 70(DE)**
Erfinder: **Henzler, Rolf**
**Filsstrasse 7**
**W-7440 Nürtingen(DE)**
Erfinder: **Walter, Hartmut, Dipl.-Ing. (FH)**
**Im Saemann 71**
**W-7050 Waiblingen(DE)**
Erfinder: **Arnold, Günter**
**Albstrasse 5**
**W-7441 Kohlberg(DE)**

(74) Vertreter: **Magenbauer, Rudolf, Dipl.-Ing. et al**
**Patentanwälte Dipl.-Ing. Rudolf Magenbauer**
**Dipl.-Phys. Dr. Otto Reimold Hölderlinweg 58**
**W-7300 Esslingen(DE)**

## Beschreibung

Die Erfindung betrifft eine Stichsäge, mit einem Sägetisch mit einem hohlprofilförmigen Aufsatz, wobei der Aufsatz einen längs verlaufenden, hinter dem Rücken eines an der Stichsäge gehalterten Sägeblattes nach vorne hin ausmündenden Durchgang aufweist und eine nach oben gewölbte, als Mantelabschnitt eines Kreiszylinders konturierte Oberseite besitzt, die eine Führungsfläche für einen schwenkbar aufgesetzten Motorkopf bildet, wobei eine zum lösbaren Festlegen des Motorkopfes gegenüber dem Aufsatz dienende Klemmschraube über eine an der Unterseite des Sägetisches vorgesehene, in den Durchgang führende Sägetischöffnung von unten her zugänglich ist, und mit Mitteln zur Sägestaubentfernung.

Motorbetriebene Stichsägen sind für gewerbliche Anwendungen und im Heimwerkerbereich weit verbreitet. Sie besitzen einen Sägetisch, der einen Motorkopf mit einem Antriebsaggregat trägt. Letzteres treibt einen Sägeblatthalter in einer hin- und hergehenden Hubbewegung an. An dem Sägeblatthalter läßt sich ein Sägeblatt spannen, das durch den Sägetisch hindurchgreift. Im Betrieb wird die Stichsäge üblicherweise an dem Motorkopf gehalten und über das zu zersägende Werkstück geführt, wobei sich der Sägetisch auf dem Werkstück abstützt und das überstehende Ende des Sägeblattes gegen das Werkstück arbeitet.

Eine Stichsäge gemäß dem Oberbegriff des Anspruches 1 geht bereits aus der US-A-4 240 204 hervor. Sie besitzt einen Motorkopf, der auf einem hohlprofilformigen Aufsatz des Sägetisches verschwenkbar angeordnet ist. Zum Festlegen der gewünschten Winkelstellung ist eine in den innerhalb des Aufsatzes vorhandenen Durchgang ragende Klemmschraube vorgesehen, die über eine Öffnung an der Unterseite des Sägetisches zugänglich ist. Es sind ferner Mittel zur Sägestaubentfernung vorgesehen, die ein im Motorkopf angeordnetes Gebläserad mit sich anschließendem Luftleitkanal umfassen. Aus letzterem wird im Betrieb der Stichsäge Luft nach vorne hin ausgeblasen, die den im Arbeitsbereich anfallenden Sägestaub nach vorne wegbläst. Diese Methode der Sägestaubentfernung ist wenig wirksam, weil sie den Staub stark aufwirbelt, was die Einsichtnahme in den Arbeitsbereich verschlechtert. Außerdem wird der Staub an die unmittelbare Umgebung der Stichsäge geblasen, was zu starker Umweltverschmutzung führt und eine Gesundheitsgefährdung der Bedienperson zur Folge haben kann.

Es ist ferner bereits bekannt, Sichsägen mit wirksameren Mitteln zur Sägestaubentfernung in Gestalt einer Staubabsaugeinrichtung auszustatten. Eine derartige Lösung wird in der FR-A-2 327 845 vorgeschlagen. Dort wird eine Stichsäge beschrieben, die über der unteren Sägetischplatte und dem Motorkopf ein im wesentlichen quaderförmiges Absauggehäuse besitzt. Letzteres bildet einen Absaugkanal, an den eine Absaugleitung anschließbar und damit im Arbeitsbereich des Sägeblattes ein Saugstrom erzeugbar ist. Der Arbeitsbereich wird dadurch wesentlich besser vom Sägestaub freigehalten und auch die Umgebung der Stichsäge wird vor Verschmutzung geschützt. Allerdings verhindert das Absauggehäuse wegen seiner mit einer Abplattung versehenen Oberseite ein Verschwenken des Motorkopfes gegenüber dem Sägetisch. Der Motorkopf ist starr und unbewegbar festgelegt, so daß Schrägschnitte wie mit der US-A-4 240 204 nicht durchführbar sind.

Vorteilhaft wäre es demnach, eine Stichsäge mit verschwenkbarem Motorkopf und einem zugunsten einer guten Absaugwirkung geschlossenen Absaugkanal zu verwirklichen. Eine in dieser Beziehung eigentlich naheliegende Kombination wird auch schon in der US-A-3 938 251 angedeutet. Dort ist der Motorkopf verschwenkbar an einem gewölbten Sägetischaufsatz angeordnet, dessen Durchgang gleichzeitig von dem der Sägestaubentfernung dienenden Luftstrom durchströmt wird. Die Schwenkeinstellung erfolgt jedoch über einen abstehenden Flansch im Bereich der Sägetischrückseite, was der Stabilität und damit der Führungsgenauigkeit beim Sägen abträglich ist. Die Flanschbefestigung erfolgte wohl aus dem Vorurteil heraus, der Absaugkanal müßte ringsum geschlossen sein.

Die Erfindung hat sich zum Ziel gesetzt, die Stichsäge der eingangs genannten Art so zu verbessern, daß unter Beibehaltung der gegebenen, hohe Stabilität gewährleistenden Schwenkmöglichkeiten eine optimierte Sägestaubentfernung möglich ist.

Hierzu ist bei der Stichsäge nach dem Oberbegriff des Anspruches 1 vorgesehen, daß der Durchgang einen Staubabsaugkanal bildet, der über einen sich am rückseitigen Ende des Aufsatzes anschließenden Absaugstutzen an eine Absaugleitung anschließbar ist, daß die an der Unterseite des Sägetisches vorgesehene Sägetischöffnung verschließbar ist, und daß als Mittel zum Verschließen der Sägetischöffnung ein unverlierbar am Sägetisch angeordneter, in dessen Längsrichtung verstellbar geführter Schieber vorgesehen ist.

Mit der Erfindung wurde also entgegen der herrschenden Auffassung erkannt, daß man die größere Stabilität der in der US-A-4 240 204 vorgeschlagenen Schwenkbefestigung auch im Zusammenhang mit einer Staubabsaugung verwenden kann, selbst wenn der Sägetisch an der Unterseite eine Öffnung aufweist. Zu diesem Zweck wird ein der Öffnung zugeordneter Schieber vorgeschlagen, der darüberhinaus noch den Vorteil einer Regulierbarkeit der Absaugleistung bzw. Falschluftzufuhr aufweist. Mit einem entfernbaren Stöpsel oder einer Klappe als Verschlußmittel wäre dies nicht möglich.

Insgesamt ist also eine effektive Absaugung des anfallenden Staubes gegeben, der gefaßt abgeführt wird, ohne die unmittelbare Umgebung der Stichsäge nennenswert zu verunreinigen. Der Aufsatz hat eine Doppelfunktion zum einen als Schwenkführung des Motorkopfes und zum anderen als Bestandteil der Mittel zur Sägestaubentfernung. Da sich die Öffnung während des Arbeitsvorganges verschließen läßt, läßt sich eine optimale Absaugwirkung nach Bedarf einstellen. Die Verwendung des Schiebers als Verschlußmittel gestattet eine stufenlose Einstellung des zur Verfügung stehenden Öffnungsquerschnittes der Sägetischöffnung, womit die Absaugleistung regulierbar ist und auch eventuell im Arbeitsbereich des Sägeblattes nicht erfaßter Staub nachträglich durch eine geringfügig offengehaltene Sägetischöffnung von unten her in den Absaugkanal eingesaugt werden kann. Dabei schützt die unverlierbare Halterung des Schiebers auch vor einem Verlust desselben. Und letztlich erlaubt die in Längsrichtung des Sägetisches vorgesehene Verstellbarkeit des Schiebers die Verwirklichung einer verhältnismäßig großen Sägetischöffnung, was im geöffneten Zustand eine optimale Zugänglichkeit zur Klemmschraube gewährleistet.

Vorteilhafte Weiterbildungen der Erfindung sind in den Unteransprüchen aufgeführt.

Die Weiterbildung nach Anspruch 2 bewirkt eine hohe Steifigkeit des Sägetisches bei gleichzeitiger schonender Behandlung der im Betrieb unter dem Sägetisch angeordneten Werkstückoberfläche. Unabhängig davon ist jedoch eine einstückige Ausbildung von Aufsatz und Sägetisch immer der Stabilität förderlich.

Im folgenden wird die Erfindung anhand eines in den Zeichnungen dargestellten Ausführungsbeispiels näher erläutert. Es zeigen:

Fig. 1
eine Seitenansicht einer Stichsäge, teilweise in der Längsmittelebene geschnitten;

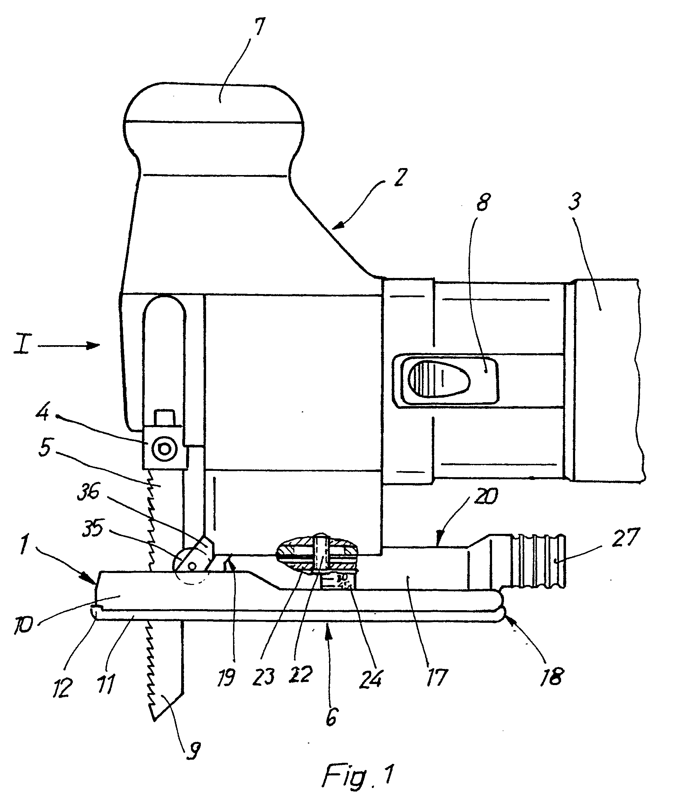

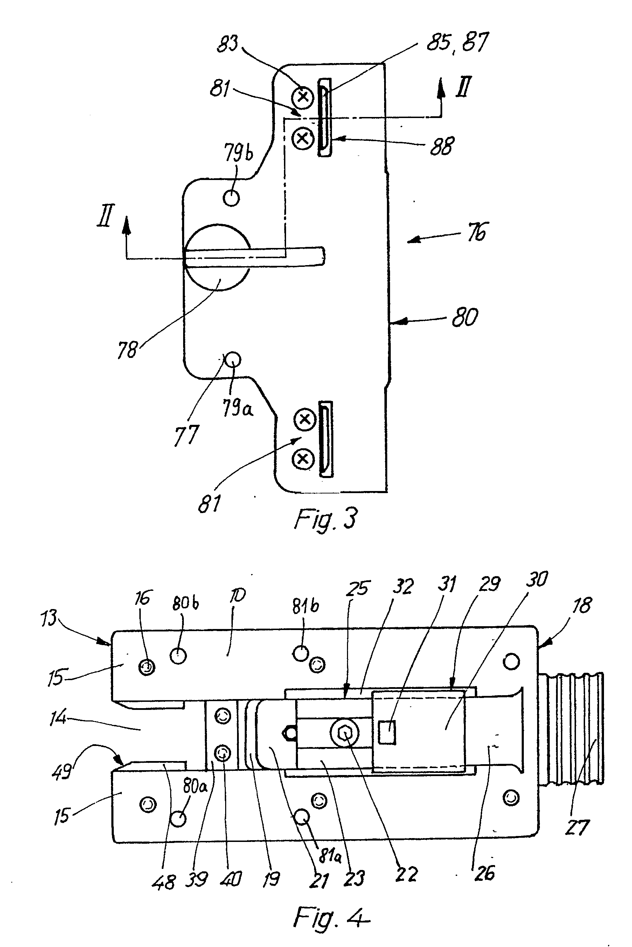

Fig. 2
eine Vorderansicht der Stichsäge mit Blick in Richtung I von Figur 1, wobei über ein Zwischenstück eine Verbindung zu einer auf das Werkstück auflegbaren Führungsplatte hergestellt ist; das Zwischenstück ist nach II-II von Figur 3 geschnitten;

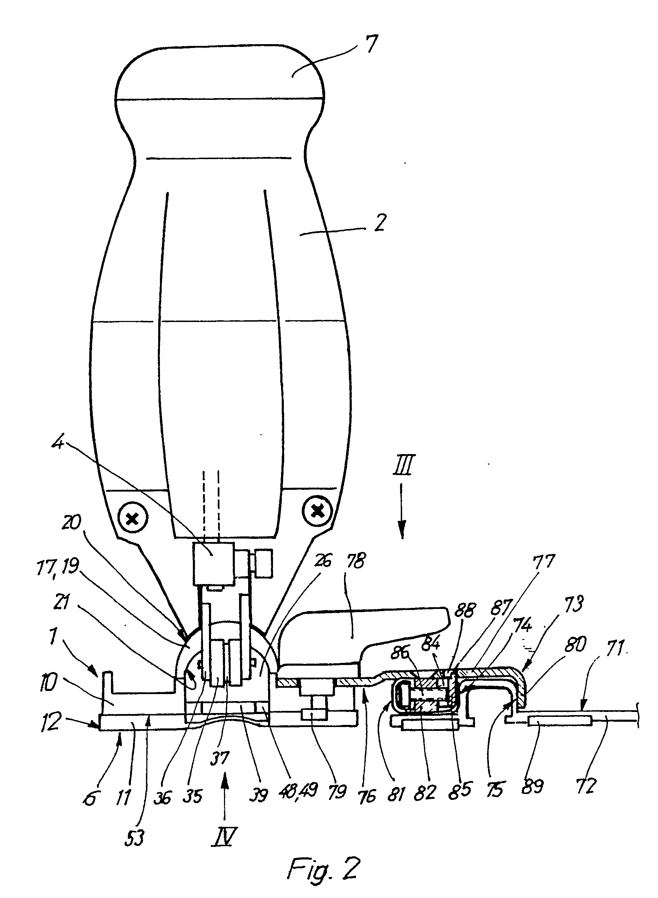

Fig. 3
eine Draufsicht auf das Zwischenstück mit Blick in Richtung III von Figur 2;

Fig. 4
eine Draufsicht auf den Sägetisch der Stichsäge von unten, d.h. in Richtung IV von Fig. 2, wobei der Laufschuh, die Stabilisierungselemente und der Spänefang abmontiert sind und der Schieber sich in seiner Offenstellung befindet;

Fig. 5
eine Fig. 4 entsprechende Ansicht nach Montage der Laufsohle, der Stabilisierungselemente und des Spänefangs mit geschlossenem Schieber;

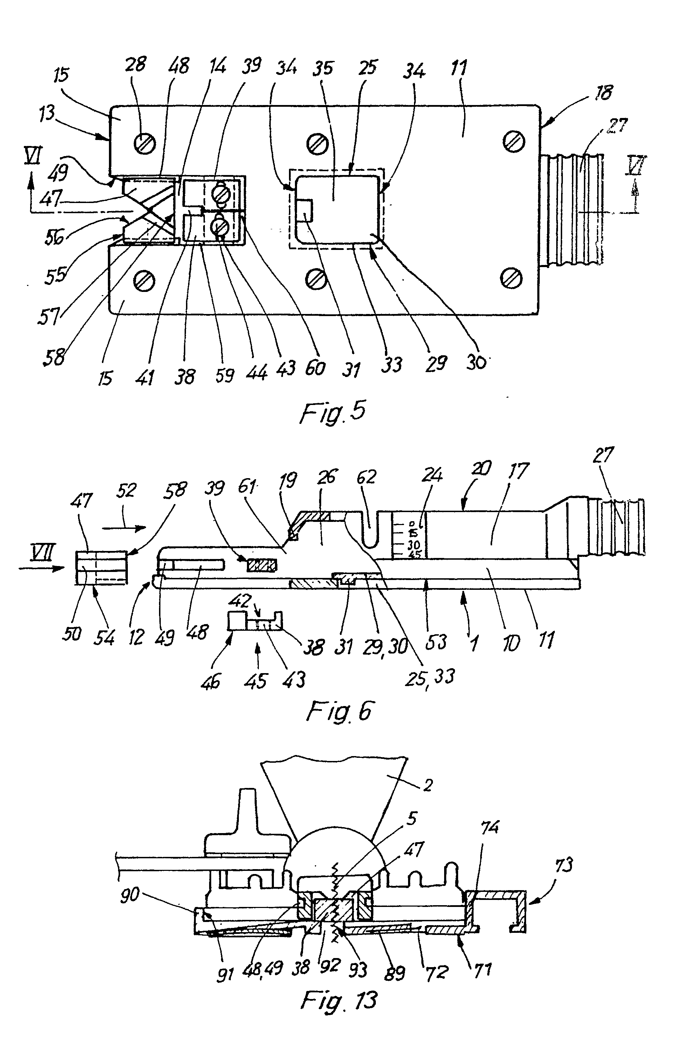

Fig. 6
einen Schnitt durch Fig. 5 nach VI-VI, wobei Stabilisierungselemente und Splitterschutz bzw. Spänefang abgenommen sind;

Fig. 7
eine vergrößerte Vorderansicht des Spänefangs in Richtung VII von Fig. 6;

Fig. 8
eine schematische Draufsicht auf eine zweite Ausführungsform von Stabilisierungselementen und Spänefang;

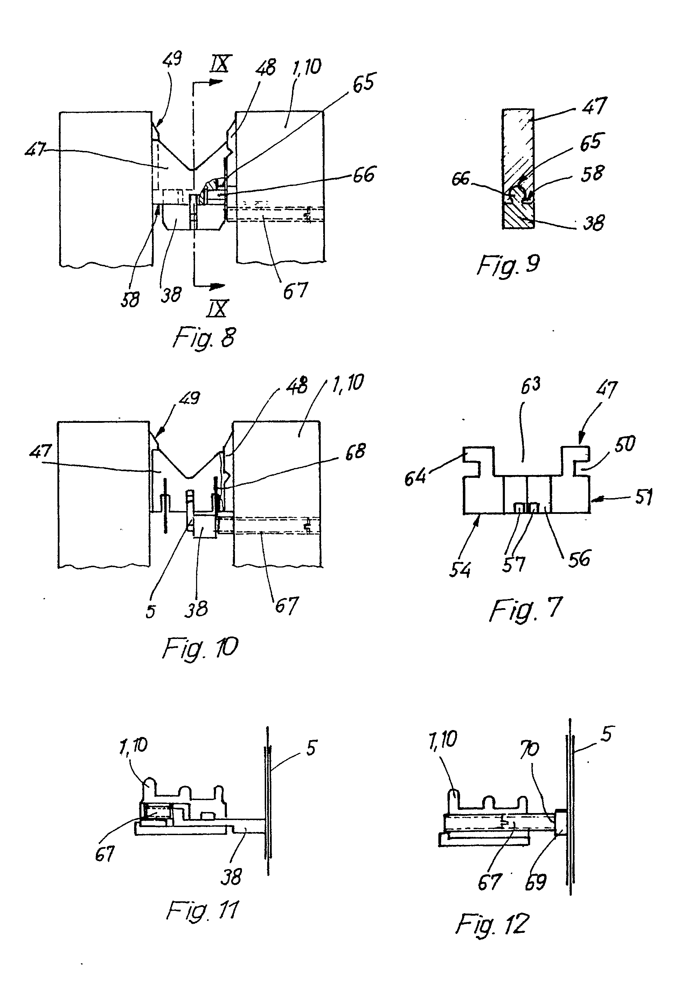

Fig. 9
einen Schnitt nach IX-IX von Fig. 8;

Fig. 10
eine schematische Draufsicht auf eine dritte Ausführungsform von Stabilisierungselementen und Splitterschutz bzw. Spänefangs;

Fig. 11 und Fig. 12
weitere Bauformen der Stabilisierungselemente in einer Fig. 2 entsprechenden Vorderansicht;

Fig. 13
eine vierte Ausführungsform von Stabilisierungselementen und Splitterschutz bzw. Spänefang sowie einer alternativen Bauform der Führungsplatte in einer Fig. 2 entsprechenden Vorderansicht und

Fig. 14
eine Variante zu der Anordnung nach Fig. 2 in derselben Darstellungsweise, jedoch nur schematisch gezeigt.

Bezugnehmend zunächst auf Fig. 1 und 2 ist eine motorgetriebene Handstichsäge dargestellt. Sie besitzt einen Sägetisch 1, der einen Motorkopf (Antriebsmotor und Getriebe) 2 mit einem Antriebsaggregat (Stabmotor) 3 trägt. Das Antriebsaggregat 3 treibt einen Sägeblatthalter 4 in einer periodischen Auf- und Abbewegung an. An dem Sägeblatthalter 4 läßt sich ein nach unten ragendes Sägeblatt 5 spannen, das durch eine Ausnehmung in dem Sägetisch 1 hindurchgreift und über die Laufsohle 6 des Sägetisches 1 hinausragt. Im Betrieb wird die Stichsäge üblicherweise mit dem Sägetisch 1 auf ein zu zersägendes Werkstück aufgesetzt. Man hält die Stichsäge mit einer Hand an den Motorkopf 2, dessen obere Partie als Griffknauf 7 ausgebildet ist, und mit der anderen Hand am Gehäuse des Antriebsaggregats 3, an dem sich auch ein Schalter 8 zum Ein-/Ausschalten und gegebenenfalls zur Drahzahlregelung des Antriebsaggregats 3 befindet. Die Stichsäge wird entsprechend der gewünschten Schnittlinie über das Werkstück geführt, wobei dieses von dem überstehenden Ende 9 des Sägeblattes 5 zersägt wird.

Der Sägetisch 1 ist zweiteilig aufgebaut. Er besteht aus einer Fußplatte 10 und einem lösbar damit verbundenen Laufschuh 11, der die Unterseite der Fußplatte 10 abdeckt und allseits über den Rand der Fußplatte 10 hinaussteht. Die Fußplatte 10 besteht aus Metall, und insbesondere Leichtmetall wie z.B. Aluminium-Druckguß. Der Laufschuh 11 dagegen besteht aus Kunststoff. Er hat die Gestalt einer ebenen Platte mit einem umlaufenden, nach oben abstehenden Randsteg 12. Die Fußplatte 10 wird in den Laufschuh 11 eingesetzt und formschlüssig von dem Randsteg 12 umschlossen. Die lösbare Verbindung zwischen Fußplatte 10 und Laufschuh 11 kann beispielsweise durch Verschrauben hergestellt werden.

Dieser zweiteilige Aufbau des Sägetisches 1 bringt verschiedene Vorteile mit sich. Die metallische Fußplatte 10 verleiht dem Sägetisch 1 die erforderliche Steifigkeit, die durch eine Anordnung geeigneter Verstärkungsrippen bzw. durch die Wahl der Plattendicke noch erhöht und den Erfordernissen entsprechend ausgelegt werden kann. Die Verstärkungsrippen lassen sich durch die unaufwendige Aluminium-Druckgußtechnik in vielfältiger Form einstückig an die Fußplatte 10 anformen. Der aus Kunststoff, und insbesondere einem thermoplastischen Kunststoffmaterial bestehende Laufschuh 11 bringt ein reibungsarmes Gleiten der Stichsäge auf dem zu zersägenden Werkstück mit sich. Empfindliche Werkstückoberflächen werden nicht zerkratzt oder durch seitliches Anstoßen beschädigt, da der Laufschuh 11 die Fußplatte 10 allseitig überragt. Außerdem bewirkt der Laufschuh 11 aus Kunststoff eine gewisse Schwingungs- und Schlagdämpfung. Man kann die Elastizitätseigenschaften des Sägetisches 1 noch verbessern, indem man zwischen der Fußplatte 10 und dem Laufschuh 11 eine elastische Zwischenlage beispielsweise aus Gummi einbringt (nicht dargestellt). Diese Zwischenlage kann klemmend befestigt werden und dadurch eine abdichtende Wirkung haben, die aus nachstehend noch näher erläuterten Gründen wünschenswert ist.

Wie man Fig. 4 entnimmt, hat der Sägetisch 1 einen länglichrechteckigen Grundriß, wobei im Bereich des Sägeblattes 5 eine zu der Schmalseite 13 hin offene, mittige Ausnehmung 14 vorhanden ist. Der Sägetisch ist hier in einer U-Form geteilt, wobei die Ausnehmung 14 beidseitig durch Laschen 15 flankiert wird. Es versteht sich, daß sowohl die Fußplatte 10 als auch der Laufschuh 11 eine derartige U-Ausnehmung besitzen. Gewindebohrungen zum Verschrauben des Laufschuhs 11 an der Fußplatte 10 sind bei 16 dargestellt.

Zurückkommend auf Fig. 1 und Fig. 2 ist mit der Fußplatte 10 des Sägetisches 1 ein hohlprofilförmiger Aufsatz 17 fest verbunden. Der Aufsatz 17 kann insbesondere in Gußtechnik einstückig an die Fußplatte 10 angeformt sein. Er ist mittig an der Oberseite des Sägetisches 1 angeordnet, in dessen Längsrichtung er sich erstreckt. Der Aufsatz 17 reicht dabei von der hinteren Schmalseite 18 des Sägetisches 1 bis dicht vor die Ausnehmung 14, in der das Sägeblatt 5 läuft. Seine Vorderkante ist bei 19 ausgewiesen. Wie man Fig. 2 entnimmt, ist der Aufsatz 17 nach oben gewölbt. Seine Oberseite 20 ist als Mantelabschnitt eines Kreiszylinders konturiert, wobei die Winkelerstreckung in dem dargestellten Ausführungsbeispiel ca. 180° beträgt; der Aufsatz 17 hat also in etwa die Gestalt eines halbierten Kreiszylinders.

Der Aufsatz 17 trägt den Motorkopf 2, der schwenkbar auf der Zylindermantelfläche 20 gelagert ist. Der Motorkopf 2 ist an seiner Unterseite 21 komplementär zu dem Aufsatz 17 konvex gewölbt. Sein Auflager bildet also ebenfalls den Abschnitt einer Zylindermantelfläche, dessen Winkelerstreckung aber wesentlich kleiner ist als die des Aufsatzes 17, so daß Spiel für eine Schwenkbewegung besteht. Im montierten Zustand kommt der Motorkopf 2 formschlüssig mit dem Aufsatz 17 zur Anlage, und er wird mittels einer Klemmschraube 22 in gewünschten Winkelstellungen auf dem Aufsatz 17 arretiert.

Die Anordnung der Klemmschraube 22 ergibt sich aus dem Anschnitt in Fig. 1. Die Klemmschraube 22 greift von unten her durch ein Langloch 62 (vgl. Fig. 6) in dem Aufsatz 17 hindurch, das sich in Umfangsrichtung der Zylindermantelfläche 20 erstreckt. Der Kopf der Klemmschraube 22 kommt im Innern des Aufsatzes 17 zu liegen, und ihr Schaft ist im Sockel des Motorkopfes 2 verschraubt. Der Kopf der Klemmschraube 22 arbeitet unmittelbar oder unter Zwischenschaltung eines geeigneten Klemmbackens 23 gegen die Innenfläche des Aufsatzes 17. Beim Anziehen der Klemmschraube 22 wird so der Motorkopf 2 gegen den Aufsatz 17 gespannt. In der in Fig. 1 und 2 dargestellten Position des Motorkopfes 2 ist das Sägeblatt 5 senkrecht zu der Sägetischebene orientiert. Die Klemmschraube 22 befindet sich im Zenit des Aufsatzes 17, und es wird ein gerader Sägeschnitt erzielt. Um einen Gehrungsschnitt zu erhalten, wird der Motorkopf 2 mit dem Sägeblatthalter 4 und Sägeblatt 5 auf dem Aufsatz 17 verschwenkt. Man löst hierzu die Klemmschraube 22, indem man mit einem Schraubwerkzeug durch eine noch näher beschriebene Öffnung 25 in dem Sägetisch 1 hindurchgreift. Sodann schwankt man den Motorkopf 2 (Antriebsmotor und Getriebe) auf dem Aufsatz 17, wobei der Schaft der Klemmschraube 22 in dem erwähnten Langloch 62 läuft, das eigentlich als Kreuzschlitz ausgebildet ist, um eine Verstellung des Tisches auch in Längsrichtung zu ermöglichen. Der Neigungswinkel läßt sich an einer Skala 24 ablesen. Ist der gewünschte Anstellwinkel erreicht, der dem Schnittwinkel des Gehrungsschnittes entspricht, so wird die Klemmschraube 22 wieder festgezogen. In dem dargestellten Ausführungsbeispiel ist ein beidseitiges Schwenken des Motorkopfes 2 um je 45° möglich. Erfindungsgemäß erfolgt durch den zur Schwenkhalterung des Motorkopfes 2 dienenden Aufsatz 17 zugleich eine Staubabsaugung von der Schnittstelle des Sägeblattes 5. Das Innere des Aufsatzes 17 bildet hierzu einen Absaugkanal, der dicht hinter dem Rücken des Sägeblattes 5 an der Oberseite des Sägetisches 1 mündet. Am gegenüberliegenden Ende des Aufsatzes 17 befindet sich ein Absaugstutzen 27, an den sich eine Absaugleitung z.B. in Form eines elastischen Schlauchs anschließen läßt. Der Absaugstutzen 27 bildet eine axiale Verlängerung des Aufsatzes 17. Er ist einstückig an diesen angeformt, so daß letztendlich die Fußplatte 10, der Aufsatz 17 und der Absaugstutzen 27 auf kostengünstige Weise einstückig im Gußverfahren hergestellt werden können. Der Absaugstutzen 27 ist gegenüber dem Aufsatz 17 nach oben abgekröpft. Er steht über die hintere Schmalseite 18 des Sägetisches 1 hinaus und ist mit geeigneten Halterippen zur Befestigung eines Schlauches versehen. Die nicht näher dargestellte lichte Öffnung des Absaugstutzens sollte eine Breite haben, die mindestens der des Absaugkanals 26 im Innern des Aufsatzes 17 entspricht. Es empfiehlt sich daher, dem Absaugstutzen 27 einen elliptischen oder ovalen Querschnitt zu verleihen, wobei seine Breite größer ist als seine Höhe (vgl. Fig. 1 und Fig. 4). Es tritt so über die volle Länge der Absaugleitung keinerlei Verengung des Strömungsquerschnitts auf, und durch die mittige Lage des Absaugkanals 26 wird ein kurzer Strömungsweg erzielt. Der Strömungswiderstand ist entsprechend gering und die Staubabsaugung höchst effektiv. Außerdem ergibt sich durch den elliptischen Querschnitt des Absaugstutzens mehr Platz für die den Stabmotor untergreifende Hand des Benutzers.

Wie man Fig. 4 entnimmt, ist die Fußplatte 10 im Bereich des Absaugkanals 26 nach unten hin offen. Der Absaugkanal 26 wird von dem Laufschuh 11 abgedeckt, der mit Montageschrauben 28 an der Fußplatte 10 verschraubt wird (vgl. Fig. 5). Der Laufschuh 11 kann in einfacher Weise abgenommen werden, um den Absaugkanal 26 zu reinigen, was gelegentlich erforderlich sein kann. Der zweiteilige Aufbau des Sägetisches 1 bietet weiterhin die Möglichkeit, den aus Kunststoff bestehenden Laufschuh 11 bei Verschleiß zu wechseln. Fußplatte 10 und Laufschuh 11 stehen in flächiger Anlage, wodurch normalerweise eine ausreichende Abdichtung des Absaugkanals 26 gewährleistet ist. Wie bereits erwähnt, kann aber gegebenenfalls auch eine elastische Zwischenlage zwischen Fußplatte 10 und Laufschuh 11 eingebracht werden, wodurch zugleich die Abdichtung des Absaugkanals 26 und die elastischen Eigenschaften des Sägetisches 1 verbessert werden.

Der Kopf der Klemmschraube 22, die den Motorkopf 2 in Winkelstellungen arretiert, liegt bei der erfindungsgemäßen Anordnung im Innern des Absaugkanals 26. Das Langloch 62, durch das der Schaft der Klemmschraube 22 ragt, wird von dem Klemmbacken 22 und/oder dem Sockel des Motorkopfes 2 abgedeckt, so daß insofern keine Falschluft in den Absaugkanal 26 eintritt. Die Öffnung 25, durch die die Klemmschraube 22 von der Unterseite des Sägetisches 1 her zugänglich ist, wird erfindungsgemäß mit einem Schieber 29 verschlossen. Der Schieber 29 ist in Fig. 4 in seiner Offenstellung und in Fig. 5 in seiner Schließstellung dargestellt. Der Schieber 2 besteht aus einer flachen Platte 30, von der ein Betätigungsknopf 31 nach unten absteht. Die Schieberplatte 30 ist an der Fußplatte 10 in Längsrichtung beweglich geführt. Hierzu dienen Nuten 32, die beidseits am Rand des Absaugkanals 26 ausgenommen sind und eine stufenförmige Erweiterung des Absaugkanals 26 bilden. Die Schieberplatte 30 ist in diese Nuten 32 eingelegt, wobei sie unter die Oberfläche der Fußplatte 10 versenkt zu liegen kommt. Die Erstreckung der Nuten 32 in Längsrichtung des Sägetisches 1 ist größer als die Länge der Schieberplatte 30, so daß sich letztere in den Nuten 32 verschieben läßt. Bei montiertem Laufschuh 11 (vgl. Fig. 5) ist die Schieberplatte 30 unverlierbar zwischen der Fußplatte 10 und dem Laufschuh 11 aufgenommen. Der Laufschuh 11 überdeckt den größten Teil des Absaugkanals 26 einschließlich der Nuten 32. Der Schieber 29 befindet sich als loses Einlegeteil zwischen dem Laufschuh 11 und der Fußplatte 10, wobei er in den Nuten 32 verschiebbar ist. Der Laufschuh 11 weist seinerseits eine Aussparung 33 auf, die mit der Öffnung 25 in der Fußplatte 10 fluchtet, aber in Länge und Breite kleiner ist als die Schieberplatte 30. Die Aussparung 33 ist in einer Endstellung des Schiebers 29 offen, so daß der Kopf der Klemmschraube 22 zugänglich ist, und in der anderen Endstellung (vgl. Fig. 5) vollständig geschlossen. Die Endstellungen können durch ein Anschlagen der Schieberplatte 30 an das Ende der Nuten 32 definiert sein. Es ist aber auch möglich, den Betätigungsknopf 31 etwas vom Rand der Schieberplatte 30 abzusetzen und gegen die Kanten 34 der Aussparung 33 laufen zu lassen, die so als Anschlag dienen. Wie man in Fig. 6 erkennt, ist die Höhe des Betätigungsknopfes kleiner als die Dicke des Laufschuhs 11. Der Schieber 29 liegt also vollständig unter die Laufsohle 6 des Sägetisches 1 versenkt.

Das Sägeblatt 5 der erfindungsgemäßen Stichsäge ist zur Erzielung eines geraden Schnitte mehrfach seitlich abgestützt und stabilisiert. In Fig. 1 und Fig. 2 erkennt man zunächst eine, Führungs- bzw. Andrückrolle 35, die sich gegen den Rücken des Sägeblattes 5 abstützt. Das Sägeblatt 5 ist in Fig. 2 der Deutlichkeit halber nicht dargestellt. Die Andrückrolle 35 ist im Abstand oberhalb des Sägetisches 1 angeordnet. Sie wird von Trägern 36 gehalten, die mit dem Motorkopf 2 verbunden sind. Die Träger 36 können insbesondere gelenkig an dem Motorkopf 2 befestigt sein und unter der Kraft einer Druckfeder stehen, die die Andrückrolle 35 gegen das Sägeblatt 5 spannt (nicht dargestellt). Die Führungs- bzw. Andrückrolle 35 selbst ist zwischen den Trägern 36 drehbar gelagert. Sie weist in mittiger Anordnung eine Ringnut 37 auf, deren Breite der Dicke des Sägeblattes 5 zuzüglich einem geringen Laufspiel entspricht. Der Rücken des Sägeblattes 5 greift in diese Ringnut 37 ein, so daß das Sägeblatt 5 zwischen den Nutflanken seitlich stabilisiert wird. wie keiner näheren Erläuterung bedarf, führt die Andrückrolle 35 entsprechend der Auf- und Abbewegung des Sägeblattes 5 eine abgeleitete Drehbewegung aus, und ihre Halterung ist gegebenenfalls darauf ausgelegt, einem Pendelhub des Sägeblattes 5 zu folgen. Die Andrückrolle 35 hat in erster Linie die Funktion eines Widerlagers, das einem Ausweichen des Sägeblattes 5 nach hinten und seitlich beim Anschnitt entgegenwirkt. Die seitliche Stabilisierungswirkung der Führungs- bzw. Andrückrolle 35 befriedigt, aber durch ihre Anordnung oberhalb von der Laufsohle 6 des Sägetisches nicht voll.

Die Erfindung sieht eine zusätzliche seitliche Führung des Sägeblattes 5 auf der Höhe des Sägetisches 1 unmittelbar oberhalb der Laufsohle 6 vor. Bezugnehmend auf Fig. 4 bis 6 dienen hierzu zwei Stabilisierungselemente 38, die beidseits gegen die Flanken des Sägeblattes 5 wirken. Die Stabilisierungselemente 38 sind Klötze aus einem thermisch hochbelastbaren Material, insbesondere Oxidkeramik wie z.B. Aluminium-Oxidkeramik. Diese Klötze können auf verschiedenste Art und Weise gegen des Sageblatt 5 angestellt sein, um so das Verbiegen des Sägeblattes an der Austrittsseite des Schnitte zu verhindern und die seitliche Ausweichbewegung des Sägeblattes 5 zu begrenzen.

In dem Ausführungsbeispiel gemäß Fig. 4 bis 6 sind die Stabilisierungselemente 38 mit der Fußplatte 10 des Sägetisches 1 verschraubt. An die Fußplatte 10 ist einstückig ein Steg 39 angeformt, der sich quer zu der Längsrichtung der Fußplatte 10 erstreckt und die Ausnehmung 14 überspannt, in der das Sägeblatt 5 läuft. Der Steg 39 kommt dabei hinter dem Rücken des Sägeblattes 5 zu liegen. Er besitzt einen abgerundet-rechteckigen Querschnitt und ist mit zwei Gewindebohrungen 40 versehen, die sich in symmetrischer Anordnung beidseits von der Längsmittelebene der Fußplatte 10 befinden und senkrecht zu der Sägetischebene gerichtet sind. Die Gewindebohrungen 40 dienen zur Befestigung je eines Stabilisierungselementes 38. Die Stabilisierungselemente haben einen im wesentlichen rechteckigen Grundriß (vgl. Fig. 5). Sie sind jeweils an der einander zugewandten Innenfläche gekerbt, so daß ein Laufspalt 41 für das Sägeblatt 5 gebildet wird. Die Tiefe dieses Laufspalts 41 ist vorzugsweise so gewählt, daß die Stabilisierungselemente 38 seitlich gegen den nicht verzahnten Teil des Sägeblattes 5 arbeiten, d.h. die Schneiden des Sägeblattes 5 nicht berühren.

In seitlicher Ansicht (Fig. 6) haben die Stabilisierungselemente 38 ein U-Profil. Sie passen mit der U-Öffnung 42 auf den Steg 39, an dem sie von der Unterseite des Sägetisches 1 her verschraubt werden. Dabei besteht eine Verstellmöglichkeit in der Sägetischebene quer zu der Schnittrichtung des Sägeblattes 5. Die Stabilisierungselemente 38 sind mit entsprechenden Langlöchern 43 versehen, durch die der Schaft ihrer Montageschrauben 44 hindurchgreift. Sie lassen sich in dem Langlochspiel auf dem Steg 39 seitlich justieren, wodurch ein Toleranzausgleich und ein Ausgleich verschiedenen Sägeblattdicken möglich ist und das Spiel des Sägeblattes 5 zwischen den Stabilisierungselementen 38 eingestellt werden kann.

Der Laufschuh 11 ist im Bereich der Stabilisierungselemente 38 in einer Form ausgeschnitten, die der der Ausnehmung 14 in der Fußplatte 10 entspricht. Die Stabilisierungselemente 38 sind daher von der Unterseite des Sägetisches 1 auch bei aufgeschraubtem Laufschuh 1 zugänglich. Pfeil 45 in Fig. 6 deutet an, wie die Stabilisierungselemente 38 auf den Steg 39 aufgesetzt werden. Man erkennt, daß die montierten Stabilisierungselemente über die Grundfläche der Fußplatte 10 hinausstehen, aber in dem Laufschuh 11 versenkt zu liegen kommen. Es ist so ein minimaler Abstand zwischen der Laufsohle 6 und der Unterkante 46 der Stabilisierungselemente 38 gewährleistet.

Den Stabilisierungselementen 38 ist erfindungsgemäß ein Splitterschutz bzw. Spänefang 47 vorgeordnet, in dem die Schneiden des Sägeblattes 5 laufen. Der Spänefang 47 besteht aus einem weichen Material, insbesondere Kunststoff, in das sich das Sägeblatt 5 zur Erstellung eines Laufspalts freischneidet. Zu diesem Zweck muß der Splitterschutz z.B. mit dem Daumen in das laufende Sägeblatt gedrückt werden. Der Spänefang 47 wird von der Fußplatte 10 des Sägetisches 1 gehaltert. Er überspannt die Ausnehmung 14, in der das Sägeblatt 5 läuft, und ist in Längsrichtung des Sägetisches 1 verstellbar. Zur Führung des Spänefangs 47 dienen zwei Rippen 48, die einstückig an die Fußplatte 10 angeformt sind und einander gegenüberliegend seitlich in die Ausnehmung 14 ragen. Die Anordnung der Rippen 48 ergibt sich im einzelnen aus Fig. 2, 4 und 6. Die Rippen 48 haben demnach einen im wesentlichen rechteckigen Querschnitt. Sie setzen mit einer das Aufziehen des Spänefangs 47 erleichternden, sich auf das Sägeblatt 5 hin verengenden Schräge 49 an der vorderen Schmalseite 13 der Fußplatte 10 an, und sie erstrecken sich parallel zu der Sägetischebene bis dicht vor den Steg 39.

Die Rippen 48 greifen in komplementäre Führungsnuten 50 an den beiden Seitenwänden 51 des Spänefangs 47 ein (vgl. Fig. 6 und Fig. 7). Der Spänefang 47 läßt sich auf den Rippen 48 bis in eine Anlagestellung mit den Stabilisierungselementen 38 verschieben, wobei das Sägeblatt 5 einen Laufspalt in den Spänefang 47 sägt. Die Aufschubrichtung des Spänefangs 47 wird in Fig. 6 durch den Pfeil 52 verdeutlicht. Die Abbildung läßt erkennen, daß der Spänefang 47 im montierten Zustand über die Grundfläche 53 der Fußplatte 10 hinaussteht, aber in dem Laufschuh 11 versenkt zu liegen kommt, so daß seine Unterseite 54 bündig mit der Laufsohle 6 abschließt bzw. in sehr geringem Abstand oberhalb von der Laufsohle 6 zu liegen kommt. In dieser Anordnung verhindert der weiche Werkstoff des Spänefangs 47 das Absplittern von Teilen des Schnittgutes an der Austrittsstelle des Sägeblattes 5, wodurch ein sehr sauberer Schnitt erzielt wird und ein minimaler Spanabfall auftritt.

Eine Beherrschung des Spanflugs ist in hohem Maße wünschenswert, damit ein geringes Spiel zwischen den Stabilisierungselementen 38 und dem Sägeblatt 5 eingestellt werden kann. Es muß möglichst verhindert werden, daß Späne zwischen das Sägeblatt 5 und die Stabilisierungselemente 38 gelangen, wo sie den Lauf des Sägeblattes bremsen und zu einem erhöhten Verschleiß führen können. Hierzu tragen das Profil des Spänefangs 47 und die effektive Staubabsaugung gemäß der Erfindung gleichermaßen bei. Bezugnehmend auf Fig. 5 bis 7 ist an der Vorderkante 55 des Splitterschutzes bzw. Spänefangs 47 in mittiger Anordnung ein dreieckiger Ausschnitt 56 vorgesehen, dessen Spitze zu dem Sägeblatt 5 hin weist und als Schnittanzeige bzw. als Anzeige für die Lage des Sägeblattes beim Sägen dient, indem er es erleichtert, die Stichsäge präzise an einem Anriß entlangzuführen. Vor der Spitze des Ausschnittes 56 gehen zwei Spanableitrinnen 57 ab, die an der Unterseite 54 des Spänefangs 47 ausgenommen sind (vgl. Fig. 5 und Fig. 7). Die Spanableitrinnen 57 rühren an die Hinterkante 58 des Spänefangs 47, wobei sie in einer Dreieckskonfiguration auseinanderlaufen und am seitlichen Rand des Spänefangs 47 enden. Die schon an sich geringe, an der Unterseite des Sägetisches 1 anfallende Spanmenge wird so seitlich von den Stabilisierungselementen 38 weggeführt.

Die Stabilisierungselemente 38 sind so dimensioniert, daß sie weder die volle Breite, noch die volle Tiefe der Ausnehmung 14 in dem Sägetisch 1 einnehmen. Seitlich neben den Stabilisierungselementen 38 bestehen daher Spalte 59 und am Rücken der Stabilisierungselemente 38 ein weiterer Spalt 60, durch die der Saugstrom der Staubabsaugeinrichtung an die Unterseite des Sägetisches 1 treten kann. Die dort anfallende Spanmenge wird so in effektiver Weise abgeführt.

Fig. 6 läßt deutlich die Vorderkante 19 des Aufsatzes 17 und die Mündung 61 des Absaugkanals 26 erkennen. Des weiteren ist das Langloch 62 ausgewiesen, in dem die zur Winkelverstellung des Motorkopfes 2 dienende Klemmschraube 22 läuft. In dem beschriebenen Ausführungsbeispiel sind die Stabilisierungselemente 38 fest mit dem Sägetisch 1 verbunden und nur in der Sägetischebene verstellbar. Es ist daher klar, daß die Stabilisierungselemente eine Schwenkbewegung des Motorkopfes 2 nicht mitmachen, so daß sie nur bei einem senkrechten Sägeschnitt Verwendung finden können. Es ist aber auch eine Abwandlung denkbar, in der die Stabilisierungselemente 38 an den einander zugewandten Enden zugespitzt sind, wobei zwischen den einander zugewandten Spitzen das Sägeblatt geschwenkt werden kann.

Gemäß Fig. 7 ist die Materialstärke des Spänefangs 47 im Arbeitsbereich des Sägeblatts 5 durch eine Einsenkung 63 verringert. Die Führung in dem Sägetisch 1 erfolgt an seitlichen Laschen 64, die sich beidseits von der Einsenkung 63 erstrecken und in denen die Führungsnuten 50 ausgenommen sind. Diese Anordnung dient in erster Linie dazu, den Spänefang 47 in der erforderlichen Tiefe gegenüber der Fußplatte 10 abzusenken, so daß er annähernd bündig mit der Laufsohle 6 abschließt.

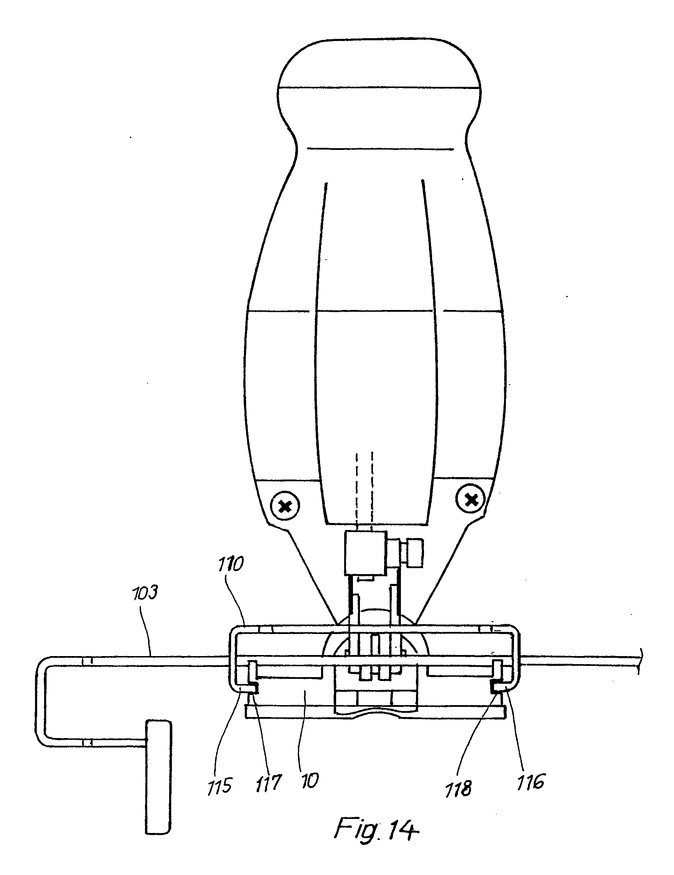

In der Anordnung der Stabilisierungselemente 38 und des Spänefangs 47 sind vielfältige Abwandlungen denkbar. Fig. 13 illustriert beispielsweise eine Bauform, bei der die aus Keramik bestehenden Stabilisierungselemente 38 starr mit dem Spänefang 47 verbunden sind. Die Keramikteile sind ganz oder zum Teil in das weiche Material des Spänefangs 47 eingekapselt, was herstellungstechnisch beispielsweise durch Eingießen erfolgen kann. Der erhaltene Verbundkörper ist in ähnlicher Weise in der das Sägeblatt 5 enthaltenden Ausnehmung 14 des Sägetisches 1 geführt, wie der Spänefang 47 gemäß Fig. 5 bis 7.

Diese Bauform ist konstruktiv sehr unaufwendig. Sie bietet aber keine Justiermöglichkeiten für die Stabilisierungselemente 38. Allgemein wird daher eine Anordnung bevorzugt, bei der die Stabilisierungselemente 38 quer zu der Sägeblattebene verstellbar und festlegbar sind, wobei die Führung der Stabilisierungselemente 38 gleichermaßen an dem Sägetisch 1 (vgl. Fig. 4 bis 6) wie auch an dem Spänefang 47 erfolgen kann. Beispiele für letztere Bauform geben die Abbildungen Fig. 8 bis Fig. 10. Der Spänefang 47 ist dabei in der zuvor beschriebenen Weise an dem Sägetisch 1 geführt.

Gemäß Fig. 8 weist der Spänefang 47 an seiner dem Sägeblatt 5 zugewandten Hinterkante beidseits der Längsmittelebene je eine Führungsnut 65 auf, die beispielsweise die Gestalt einer Rundnut, T-Nut oder Schwalbenschwanznut haben kann. Die Führungsnuten 65 erstrecken sich in der Sägetischebene quer zu der Schnittrichtung des Sägeblattes 5, sie sind als Sacknuten ausgebildet. Der Mittelbereich des Spänefangs 47 zwischen den Führungsnuten 65 ist massiv, so daß das Sägeblatt 5 hier einen Laufspalt einschneiden kann. Das Sägeblatt 5 ist zwischen zwei Stabilisierungselementen 38 geführt, die von dem Spänefang 47 getragen werden. Die Stabilisierungselemente setzen am Rücken des Spänefangs 47 an, und sie schließen nach oben und unten bündig mit dem Spänefang 47 ab. An die wiederum aus Keramik bestehenden Stabilisierungselemente 38 ist ein Führungkopf 66 angeformt, der eine komplementäre Gestalt zu der Führungsnut 65 hat und in diese eingreift. Mittels dieses Führungskopfes 66 lassen sich die Stabilisierungselemente 38 quer zu der Sägeblattebene justieren und gegen das Sägeblatt 5 anstellen. Die erforderliche Haltekraft wird von zwei Stellschrauben 67 aufgebracht, die in Gewindebohrungen des Sägetisches 1 aufgenommen sind und die Stabilisierungselemente 38 beaufschlagen.

In der alternativen Bauform der Fig. 10 sind die Stabilisierungselemente 38 an federnden Tragarmen 68 gehaltert, die ein Verstellen quer zu der Sägeblattebene ermöglichen. Die Stabilisierungselemente 38 werden wiederum von Stellschrauben 67 beaufschlagt, die sich in dem Sägetisch 1 vorschrauben. Die Tragarme 68 sind in dem Spänefang 47 verankert, und insbesondere in das Kunststoffmaterial des Spänefangs 47 eingegossen. Es versteht sich aber, daß man die federnden Tragarme 68 gegebenenfalls auch an dem Sägetisch 1 befestigen kann.

Fig. 11 und Fig. 12 zeigen weitere Ausführungsbeispiele für die seitlich gegen das Sägeblatt 5 arbeitenden Stabilisierungselemente 38. Diese haben gemäß Fig. 11 die Form eines Keramikschiebers, der in dem Sägetisch 1 quer zu der Sägeblattebene verschiebbar gelagert ist. Die Schieber werden von Stellschrauben 67 beaufschlagt und so gegen das Sägeblatt 5 angestellt. Gemäß Fig. 12 dient als Stabilisierungselement ein Keramikplättchen 69, das unlösbar starr mit der vorderen Stirnfläche 70 einer Stellschraube 67 verbunden, und insbesondere auf diese Stirnfläche aufgeklebt ist. Auch hier kann durch Drehen der Stellschraube 67 der Abstand zwischen dem Stabilisierungselement und dem Sägeblatt eingestellt werden.

Durch die Stabilisierung des Sägeblattes 5 unmittelbar oberhalb der Laufsohle 6 wird der Geradschnitt einer Stichsäge wesentlich verbessert. Dieses Ergebnis läßt sich durch die Verwendung eines dickeren Sägeblattes weiter fördern. Während übliche Stichsägeblätter eine Dicke von maximal 1,35 mm haben, sieht die Erfindung eine Verwendung von Sägsblättern 5 mit mehr als 1,35 mm und bis zu 2 mm Dicke vor, wobei ein bevorzugter wert bei 1,75 mm liegt. Durch die Erhöhung der Dicke auf 1,75 mm steigt die Biegesteifigkeit des Sägeblattes 5 um 118% an, und die Schnittgenauigkeit der Säge wird entsprechend verbessert. Zwar läßt die Schnittleistung wegen des größeren Zerspanungsvolumens etwas nach, doch ist diese Minderung der Schnittleistung nur unwesentlich.

Als weitere Maßnahme zur Verbesserung des Geradschnitts sieht die Erfindung die Verwendung einer Führungsplatte vor, die sich auf das zu zersägende Werkstück auflegen läßt und den Verlauf des Sägeschnittes bestimmt. Eine derartige Führungsplatte 71 ist in Fig. 2 dargestellt. Sie besteht aus einem ebenen Auflageteil 72, an dem eine nach oben abstehende Schiene 73 mit parallelen Führungsflächen 74, 75 ausgeformt ist. Die Führungsplatte 71 kann beispielsweise aus Blech bestehen, und die Schiene 73 kann als Sicke durch Prägen hergestellt sein (nicht dargestellt). Es ist aber auch möglich, die Führungsplatte 71 als Strangpreßteil z.B. aus Leichtmetall zu fertigen, wobei man der Schiene 73 ein im Querschnitt rechteckiges, nach unten hin offenes Hohlprofil verleihen kann. Auch andere Ausführungsformen sind ohne weiteres denkbar. Es empfiehlt sich, an der Unterseite der Führungsplatte 71 einen rutschfesten Belag 89 insbesondere aus Kunststoff vorzusehen, so daß die Führungsplatte 71 selbsthemmend auf dem zu zersägenden Werkstück haftet.

Die Verbindung zwischen dem Sägetisch 1 und der Führungsplatte 71 wird gemäß Fig. 2 und 3 mit einem Zwischenstück 76 hergestellt. Das Zwischenstück 76 ist der Grundform nach ein L-Profil. Sein langer L-Schenkel 77 wird an dem Sägetisch 1 festgelegt, was z. B. durch Exzenterklemmung erfolgen kann. Man erkennt einen Knebel 78, der drehbar in dem langen L-Schenkel 77 gelagert und mit einem Exzenter 79 verbunden ist. Der Exzenter 79 arbeitet gegen ein Widerlager in dem Sägetisch 1, so daß der L-Schenkel 77 durch Drehung an dem Knebel 78 gegen den Sägetisch 1 geklemmt wird. Der Sägetisch 1 ist beidseits des Aufsatzes 17 mit Befestigungspunkten für das Zwischenstück 76 versehen, so daß dieses wahlweise auf beiden Seiten der Stichsäge montiert werden kann. Das Zwischenstück 76 kragt seitlich von dem Sägetisch 1 aus, wobei der lange L-Schenkel 77 in einem solchen Abstand von der Laufsohle 6 zu liegen kommt, daß er die Schiene 73 übergreift. Um ein Verdrehen des Zwischenstücks 76 um den Exzenter 79 zu verhindern, sind am Zwischenstück noch zwei Stifte 79a, 79b vorgesehen, die in die Bohrungen 80a und 80b bzw. 81a und 81b eingesteckt werden können.

Der kurze L-Schenkel 80 ist nach unten abgewinkelt. Er kommt mit der einen Führungsfläche 75 der Schiene 73 zur Anlage. Die gegenüberliegende Führungsfläche 74 wird von zwei Stellgliedern 81 beaufschlagt, die in Längsrichtung versetzt an dem langen L-Schenkel 77 angebracht sind. Mit den Stellgliedern 81 wird eine Zweipunktführung des Zwischenstückes 76 auf der Schiene 73 erzielt, wobei das Führungsspiel eingestellt werden kann.

Die Stellglieder 81 bestehen jeweils aus einem geschlitzten Kunststoffkörper 82, der mit Montageschrauben 83 an dem langen L-Schenkel 77 befestigt ist. Der Schlitz in dem Kunststoffkörper 82 ist bei 84 ausgewiesen. Er erstreckt sich in Längsrichtung der Schiene 73 und teilt in dem Kunststoffkörper 82 eine Wange 85 ab, die aufgrund ihrer Dicke elastisch deformierbar ist. Die Wange 85 wird von einer Stellschraube 86 beaufschlagt, die in einer Gewindebohrung des Kunststoffkörpers 82 aufgenommen ist, den Schlitz 84 durchsetzt und sich quer zu der Längsrichtung der Schiene 73 vorschraubt. Die Stellschraube 86 drückt die Wange 85 gegen die Führungsfläche 74 der Schiene 73. Der Rücken der Wange 85, gegen den die Stellschraube 86 arbeitet, kann dabei in nicht näher dargestellter Weise mit einem vorzugsweise federnden Metallbügel hinterlegt sein.

Durch die Deformation der Wange 85 wird das Laufspiel des Zwischenstücks 76 auf der Schiene 73 eingestellt. Der lange L-Schenkel 77 des Zwischenstücks 76 ist jeweils im Bereich der Wange 85 aufgebrochen, und die Wangen 85 ragen mit einem Fortsatz 87 in die entsprechende Spalte 88 hinein. Hierdurch ist die Auslenkung der Wangen 85 anschlagbegrenzt, und es ist eine einfache visuelle Kontrolle der jeweiligen Einstellung möglich. Insbesondere können so die beiden Anlagepunkte des Stellgliedes 81 in vorteilhafter Weise gegeneinander abgeglichen werden.

Die Exzenterklemmung des Zwischenstücks 76 erfolgt in Längsrichtung gesehen zwischen den beiden Stellgliedern 81. Der lange L-Schenkel 77 kann in diesem Bereich verschmälert sein, wie dies in Fig. 3 dargestellt ist.

Eine alternative Bauform einer Führungsplatte 71 ist in Fig. 13 illustriert. Die Führungsplatte 71 weist ebenfalls ein Auflageteil 72 auf, an dessen Unterseite ein rutschfester Belag 89 vorgesehen ist. An das Auflageteil 72 ist eine Schiene 73 angeformt, die eine seitliche Führungsfläche 74 bereitstellt. Die Schiene 73 befindet sich an dem einen längsseitigen Rand des Auflageteils 72. Der gegenüberliegende Rand der Führungsplatte 71 wird von einem nach oben abstehenden Steg 90 gebildet, dessen Innenseite 91 als zweite Führungsfläche ausgebildet ist. Der Sägetisch 1 wird zwischen die Schiene 73 und den Steg 90 auf die Führungsplatte 71 aufgesetzt und in Längsrichtung der Führungsplatte 71 verschoben. Man erkennt, daß der Sägetisch 1 beidseits von der Führungsplatte 71 gefaßt wird. Die Führungsplatte 71 ist bei 92 in Längsrichtung geschlitzt, um einen Durchgriff des Sägeblattes 5 zu ermöglichen. Das Sägeblatt 5 arbeitet dabei dicht am Rand 92 des Durchgriffsspaltes 92, der vorzugsweise von der Kante des rutschfesten Belags 89 gebildet wird. Die Führungsplatte 71 kann so der gewünschten Schnittlinie entsprechend präzise ausgerichtet werden.

## Patentansprüche

1. Stichsäge, mit einem Sägetisch (1) mit einem hohlprofilförmigen Aufsatz (17), wobei der Aufsatz (17) einen längs verlaufenden, hinter dem Rücken eines an der Stichsäge gehaltenen Sägeblattes (5) nach vorne hin ausmündenden Durchgang (26) aufweist und eine nach oben gewölbte, als Mantelabschnitt eines Kreiszylinders konturierte Oberseite (20) besitzt, die eine Führungsfläche (20) für einen schwenkbar aufgesetzten Motorkopf (2) bildet, wobei eine zum lösbaren Festlegen des Motorkopfes (2) gegenüber dem Aufsatz (17) dienende Klemmschraube (22) über eine an der Unterseite des Sägetisches (1) vorgesehene, in den Durchgang (26) führende Sägetischöffnung (25) von unten her zugänglich ist, und mit Mitteln zur Sägestaubentfernung,
dadurch gekennzeichnet,
daß der Durchgang einen Staubabsaugkanal (26) bildet, der über einen sich am rückseitigen Ende des Aufsatzes (17) anschließenden Absaugstutzen (27) an eine Absaugleitung anschließbar ist,
daß die an der Unterseite des Sägetisches (1) vorgesehene Sägetischöffnung (25) verschließbar ist, und daß als Mittel zum Verschließen der Sägetischöffnung (25) ein unverlierbar am Sägetisch (1) angeordneter, in dessen Längsrichtung verstellbar geführter Schieber (29) vorgesehen ist.

2. Stichsäge nach Anspruch 1, dadurch gekennzeichnet, daß der Sägetisch (1) eine metallische Fußplatte (10) besitzt, über die er insbesondere einstückig fest mit dem Aufsatz (17) verbunden ist, und ferner einen an der Unterseite der Fußplatte (10) angeordneten, aus Kunststoffmaterial bestehenden Laufschuh (11) aufweist.

3. Stichsäge nach Anspruch 2, dadurch gekennzeichnet, daß die Fußplatte (10) im Bereich des Absaugkanals (26) nach unten hin offen und dort vom Laufschuh (11) abgedeckt ist.

4. Stichsäge nach Anspruch 2 oder 3, dadurch gekennzeichnet, daß der Laufschuh (11) eine mit der Sägetischöffnung (25) fluchtende und durch den Schieber (29) verschließbare Aussparung (33) aufweist.

5. Stichsäge nach einem der Ansprüche 2 bis 4, dadurch gekennzeichnet, daß der Schieber (29) unverlierbar im Bereich zwischen der Fußplatte (10) und dem Laufschuh (11) aufgenommen ist.

6. Stichsäge nach einem der Ansprüche 2 bis 5, dadurch gekennzeichnet, daß der Schieber (29) an der Fußplatte (10) und/oder am Laufschuh (11) geführt ist.

7. Stichsäge nach einem der Ansprüche 1 bis 6, dadurch gekennzeichnet, daß der Absaugstutzten (27) einen elliptischen oder ovalen Querschnitt hat und breiter ist als hoch.

8. Stichsäge nach einem der Ansprüche 1 bis 7, dadurch gekennzeichnet, daß der Aufsatz (17) über ein sich in Umfangsrichtung der Führungsfläche (20) erstreckendes, den Durchgriff der Klemmschraube (22) ermöglichendes Langloch (62) verfügt, das Bestandteil eines eine Verstellung des Sägetisches (1) in Längsrichtung gegenüber dem Motorkopf (2) ermöglichenden Kreuzschlitzes ist.

9. Stichsäge nach einem der Ansprüche 1 bis 8, dadurch gekennzeichnet, daß die Klemmschraube (22) ausgehend vom Inneren des Absaugkanals (26) durch ein sich in Umfangsrichtung der Führungsfläche (20) erstreckendes Langloch (62) hindurchgreift und mit dem Motorkopf (2) verschraubt ist, wobei ihr im Innern des Aufsatzes (17) oder des Absaugkanals (26) angeordneter Kopf lösbar mittelbar oder unmittelbar gegen die Innenfläche des Aufsatzes (17) arbeitet.

10. Stichsäge nach Anspruch 9, dadurch gekennzeichnet, daß das Langloch (62) von einem zwischen Aufsatz (17) und Schraubenkopf angeordneten Klemmbacken (23) und/oder vom Sockel des Motorkopfes (2) abgedeckt wird.

**Claims**

1. A compass saw with a saw table (1) with a hollow-section top piece (17) having an axial passage (26) opening towards the front behind the back of a saw blade (5) mounted on the compass saw and a domed top (20) profiled like the lateral area of a regular cylinder to form a guide surface (20) for a pivotably mounted motor head (2), a clamping screw (22) designed for the disengageable locking of the motor head (2) relative to the top piece (17) being accessible by way of a saw table opening (25) provided on the underside of the saw table (1) and leading into the passage (26), and with means for saw dust removal, characterised in that the passage forms a dust extraction duct (26) connectable to an extraction pipe via a connection piece (27) at the rear end of the top piece (17), in that the saw table opening (25) on the underside of the saw table (1) can be closen, and in that the means for closing the saw table opening (25) is a slide (29) held captive at the saw table (1) and capable of guided axial movement.

2. A compass saw according to Claim 1 or 2, characterised in that the saw table (1) has a metal foot plate (10) whereby it is, in particular, integrally fixed to the top piece (17) and is further provided with a shoe (11) made of a plastic material and arranged on the bottom of the foot plate (10).

3. A compass saw according to Claim 2, characterised in that the foot plate (10) is open towards the bottom in the area of the extraction duct (26), where it is covered by the shoe (11).

4. A compass saw according to Claim 2 or 3, characterised in that the shoe (11) has a recess (3) flush with the saw table opening (25) and closable by the slide (29).

5. A compass saw according to any of Claims 2 to 4, characterised in that the slide (29) is held captive in the area between the foot plate (10) and the shoe (11).

6. A compass saw according to any of Claims 2 to 5, characterised in that the slide (29) is guided on the foot plate (10) and/or the shoe (11).

7. A compass saw according to any of Claims 1 to 6, characterised in that the extraction connection piece (27) has an elliptical or oval cross-section, its width being greater than its height.

8. A compass saw according to any of Claims 1 to 7, characterised in that the top piece (17) is provided with a slot (62) extending in the circumferential direction of the guide surface (20) and forming an opening for the clamping screw (22), said slot being part of a cross-slot permitting the axial adjustment of the saw table (2) relative to the motor head (2).

9. A compass saw according to any of Claims 1 to 8, characterised in that the clamping screw (22) extends from the interior of the extraction duct (26) through a slot (62) extending in the circumferential direction of the guide surface (20) and is bolted to the motor head (2), a head located in the interior of the top piece (17) or the extraction duct (26) releasably acting either indirectly or directly against the inner surface of the top piece (17).

10. A compass saw according to Claim 9, characterised in that the slot (62) is covered by jaws (23) arranged between the top piece (17) and the screw head and/or by the base of the motor head (2).

**Revendications**

1. Scie sauteuse comportant une table de sciage (1) avec une pièce rapportée (17) en forme de profilé creux, dans laquelle la pièce rapportée (17) présente un passage (26) s'étendant longitudinalement, débouchant vers l'avant, derrière le dos d'une lame de scie (5) maintenue sur la table de sciage et possédant une face supérieure (20) courbée vers le haut, dont le contour se présente comme une partie d'enveloppe d'un cylindre cylindrique, laquelle face supérieure forme une surface de guidage (20) pour une tête de moteur (2) montée pivotante, dans laquelle une vis de serrage (22), servant à la fixation amovible de la tête de moteur (2) par rapport à la pièce, est accessible du bas, par une ouverture de table de sciage (25) prévue sur la face inférieure de la table de sciage (1), menant au passage (26), et comportant des moyens destinés à éliminer la poussière de sciage, caractérisée en ce que le passage forme un canal d'aspiration de poussière (26) qui peut être raccordé à un conduit d'aspiration, par l'intermédiaire d'une tubulure d'aspiration (27) se raccordant à l'extrémité arrière de la pièce rapportée (17), en ce que l'ouverture de table de sciage (25), prévue sur la face inférieure de la table de sciage (1), peut être fermée et en ce qu'il est prévu un coulisseau (29) placé de manière imperdable sur la table de sciage (1), guidé déplaçable dans sa direction longitudinale, comme moyen destiné à fermer l'ouverture de table de sciage (25).

2. Scie sauteuse selon la revendication 1 ou 2, caractérisée en ce que la table de sciage (1) possède une plaque de pied (10) métallique, par laquelle elle est reliée à la pièce rapportée (17), notamment de façon fixe et d'une seule pièce et en ce qu'elle présente en outre un patin (11) en matière plastique, placé sur la face inférieure de la plaque de pied (10).

3. Scie sauteuse selon la revendication 2, caractérisée en ce que la plaque de pied (10) est ouverte vers le bas dans la région du canal d'aspiration (26) et est recouverte à cet endroit par le patin (11).

4. Scie sauteuse selon la revendication 2 ou 3, caractérisée en ce que le patin (11) présente une découpe (33) alignée avec l'ouverture de table de sciage (25) et qui peut être fermée par le coulisseau (29).

5. Scie sauteuse selon l'une des revendications 2 à 4, caractérisée en ce que le coulisseau (29) est logé imperdable dans la région comprise entre la plaque de pied (10) et le patin (11).

6. Scie sauteuse selon l'une des revendications 2 à 5, caractérisée en ce que le coulisseau (29) est guidé sur la plaque de pied (10) et/ou sur le patin (11).

7. Scie sauteuse selon l'une des revendications 1 à 6, caractérisée en ce que la tubulure d'aspiration (27) présente une section elliptique ou ovale et est plus large que haute.

8. Scie sauteuse selon l'une des revendications 1 à 7, caractérisée en ce que la pièce rapportée (17) présente un trou allongé (62) s'étendant dans la direction périphérique de la surface de guidage (20), permettant le passage de la vis de serrage (22), lequel trou allongé fait partie d'une fente en croix permettant un déplacement de la table de sciage (1) dans la direction longitudinale, par rapport à la tête de moteur (2).

9. Scie sauteuse selon l'une des revendications 1 à 8, caractérisée en ce que la vis de serrage (22), partant de l'intérieur du canal d'aspiration (26), passe à travers un trou allongé (62) s'étendant dans la direction périphérique de la surface de guidage (20) et est vissée avec la tête de moteur (2), sa tête placée à l'intérieur de la partie rapportée (17) ou du canal d'aspiration (26) fonctionnant de manière amovible, directement ou indirectement, contre la surface intérieure de la pièce rapportée (17).

10. Scie sauteuse selon la revendication 9, caractérisée en ce que le trou allongé (62) est recouvert par une mâchoire de serrage (23), placée entre la pièce rapportée (17) et la tête de vis et/ou par le socle de la tête de moteur (2).

Fig. 1

Fig. 2

Fig. 3

Fig. 4

Fig. 5

Fig. 6

Fig. 13

Fig. 8

Fig. 9

Fig. 10

Fig. 7

Fig. 11

Fig. 12

Fig. 14

18